# EUROPEAN PATENT SPECIFICATION

(11) **EP 4 459 698 B1**
(45) Date of publication and mention of the grant of the patent: **15.04.2026**
(21) Application number: 23202096.6
(22) Date of filing: 06.10.2023
(51) Int. Cl.: H01M 4/134, H01M 4/38, H01M 10/052, H01M 10/0567, H01M 10/0568

(54) **LITHIUM SECONDARY BATTERY HAVING LONG LIFESPAN**
LITHIUMSEKUNDÄRBATTERIE MIT LANGER LEBENSDAUER
BATTERIE SECONDAIRE AU LITHIUM AYANT UNE LONGUE DURÉE DE VIE

(30) Priority: 03.05.2023 KR 20230058000
(43) Date of publication of application: 06.11.2024
(73) Proprietor: LG ENERGY SOLUTION, LTD., Seoul 07335 (KR)
(72) Inventor: KIM, Bong-Soo, 34122 Daejeon (KR); KIM, Sang-Woo, 34122 Daejeon (KR); PARK, Hye-Gwon, 34122 Daejeon (KR); JUNG, Ji-In, 34122 Daejeon (KR)
(74) Representative: Goddar, Heinz J.

(56) References cited:
- JP-A- 2022 550 941
- KR-B1- 102 120 057

## Description

### TECHNICAL FIELD

The present disclosure relates to a lithium-sulfur battery, and and a method fr evaluating a lifespan of a lithium-sulfur battery.

### BACKGROUND ART

As the range of application of lithium secondary batteries is extended to not only mobile electronic devices but also electric vehicles (EV) and energy storage systems (ESS), there is a growing demand for lithium secondary batteries with high capacity, high energy density and long lifespan.

Among various types of lithium secondary batteries, lithium-sulfur batteries are a battery system using sulfur-based materials comprising sulfur-sulfur (S-S) bond as the positive electrode active material, and lithium metals, carbon-based materials capable of intercalation/deintercalation of lithium ions, or silicon and tin that can be alloyed with lithium for the negative electrode active material.

In lithium-sulfur batteries, sulfur, the main material of the positive electrode active material has low atomic mass, is very abundant in nature and can be found around the world, is low in cost, and is non-toxic and eco-friendly.

Additionally, lithium-sulfur batteries have theoretical specific capacity of 1,675 mAh/g by conversion reaction (S₈+16Li⁺+16e⁻ → 8Li₂S) of lithium ion and sulfur at the positive electrode, and when lithium metal is used in the negative electrode, the theoretical energy density is 2,600 Wh/kg. This value is much higher than the theoretical energy density of the other battery systems being studied now (Ni-MH batteries: 450 Wh/kg, Li-FeS batteries: 480 Wh/kg, Li-MnO₂ batteries: 1,000 Wh/kg, Na-S batteries: 800 Wh/kg) and lithium ion batteries (250 Wh/kg), so among secondary batteries developed so far, lithium-sulfur batteries are gaining attention as lithium secondary batteries with high capacity, eco-friendliness and low cost.

During discharging, the lithium-sulfur batteries undergo reduction reaction in which sulfur accepts electrons at the positive electrode, and in this instance, lithium polysulfide (Li₂Sₓ, x=2 to 8) is produced at the positive electrode, and some of the lithium polysulfide are easily dissolved in the electrolyte solution and completely reduced, and then precipitate on the negative electrode in a solid form of lithium sulfide (Li₂S), or lithium polysulfide reacts with the lithium metal of the negative electrode, which causes surface contamination of the negative electrode, inducing sulfur (S) passivation on the negative electrode, resulting in irreversible loss of the active material, and this shuttle phenomenon impedes long life characteristics.

Accordingly, there is a need for the development of lithium-sulfur batteries for suppressing passivation on the negative electrode caused by repeated charge and discharge and achieving long life characteristics.

JP 2022 550941 A discloses an electrolyte solution for a lithium secondary battery including a first solvent including at least one glyme-based compound; a second solvent including at least one conjugated heterocyclic compound; a third solvent including at least one non-conjugated cyclic ether-based compound; and lithium salt.

KR 102 120 057 B1 discloses a lithium-sulfur battery which locates a separator in a shape of graphite felt between an anode and a separator and allows lithium polysulfide generated during charging and discharging to be physically / chemically adsorbed to the separator so as to prevent a shuttle phenomenon. The lithium-sulfur battery having graphite felt by electrospinning comprises: an anode formed to include a sulfur compound; a cathode formed to include lithium; a separator located between the anode and the cathode; an isolation film located between the anode and the separator, formed of carbon fiber by electrospinning, having a graphite structure by carbonization, and adsorbing lithium polysulfide (Li_2S_n, 2 < n <= 8); and an electrolyte impregnated in the anode, the cathode, the separator, and the isolation film.

### DISCLOSURE

### Technical Problem

The present disclosure is designed to solve the above-described problem, and therefore the present disclosure is directed to providing a lithium-sulfur battery having long life characteristics.

The present disclosure is further directed to providing a lithium-sulfur battery with high energy density.

### Technical Solution

The above problem is solved in accordance with the subject-matter of the independent claims. Further embodiments result from the sub-claims and the following written description.

To achieve the above-described objective, according to an aspect of the present disclosure, there is provided a lithium-sulfur battery of the following embodiments.

The lithium-sulfur battery according to a first embodiment comprises an electrode assembly, an electrolyte solution, and a case accommodating the electrode assembly,
wherein the electrode assembly comprises a positive electrode comprising a sulfur-carbon composite, a negative electrode, and a separator interposed between the positive electrode and the negative electrode;
the negative electrode comprises a lithium-containing layer; and a solid electrolyte interphase (SEI) layer on at least one surface of the lithium-containing layer, and wherein the electrolyte solution contains 1 weight% or more of a nitrogen compound based on the total weight of the electrolyte solution.
The negative electrode comprises sulfur (S) in an amount between 0 weight% and 3 weight% based on a total weight of the negative electrode at a state of charge (SOC) 100.

In another aspect the lithium-sulfur battery according to a second embodiment comprises an electrode assembly, an electrolyte solution, and a case accommodating the electrode assembly,
wherein the electrode assembly comprises a positive electrode comprising a sulfur-carbon composite, a negative electrode, and a separator interposed between the positive electrode and the negative electrode;
the negative electrode comprises a lithium-containing layer; and a solid electrolyte interphase (SEI) layer on at least one surface of the lithium-containing layer, and
wherein the negative electrode comprises sulfur (S) in an amount in a range between 0 weight% and 3 weight% based on a total weight of the negative electrode at a state of charge (SOC) 100.

According to a third embodiment, in the second embodiment, wherein the electrolyte solution contains 1 weight% or more of a nitrogen compound based on the total weight of the electrolyte solution.

According to a fourth embodiment, in any one of the first and fourth embodiments, the nitrogen compound is lithium nitrate (LiNO₃).

According to a fifth embodiment, in any one of the first to fourth embodiments, the SOC 100 may have a potential of 2.4 V to 2.7 V.

According to a sixth embodiment, in any one of the first to fifth embodiments, the amount of the sulfur (S) in the negative electrode may be 3 weight% or less, preferably 2 weight% or less, more preferably 1 weight% or less, based on a sum of weights of the sulfur (S) and the lithium (Li) in the negative electrode.

According to an seventh embodiment, in any one of the first to sixth embodiments, the amount of the lithium (Li) in the negative electrode is 96 weight% or more, preferably 99 weight% or more, based on the sum of weights of the sulfur (S) and the lithium (Li) in the negative electrode,
and / or
the thickness of the negative electrode may be 70 *µ*m or less, preferably in a range between 70 *µ*m and 40 µm.

According to a eighth embodiment, in any one of the first to seventh embodiments, a weight ratio (El/S weight ratio) of the electrolyte solution and the sulfur in the sulfur-carbon composite may be 3.5 g/g or less.

According to a ninth embodiment, in any one of the first and third to eighth embodiments, the electrolyte solution may comprise a nonaqueous solvent, and two lithium salts, wherein the lithium salts are different from each other, wherein one lithium salt is a nitrogen containing lithium salt and is the nitrogen compound according to the present disclosure, preferably one lithium salt does not contain nitrate.

According to an tenth embodiment, in any one of the first and third to ninth embodiments, the concentration of the nitrogen compound in the electrolyte solution is in the range between 0.15 and 1.5 mol/ L, and / or the ratio of the concentration of the lithium salt (mol/ L) and the concentration of the nitrogen compound (mol/ L) is in the range between 0.5 and 6.0,
and / or
the lithium concentration in the electrolyte solution, preferably obtained from the sum of the concentration of the lithium salt (mol/ L) in the electrolyte solution and the concentration of the nitrogen compound (mol/ L) in the electrolyte solution, is 0.4 mol/ L or more, preferably in the range between 0.4 and 3.0 mol/L.

According to a eleventh embodiment, in any one of the first to tenth embodiments, an energy density of the lithium-sulfur battery may be 300 Wh/kg or more.

According to another aspect of the present disclosure, there is a method for evaluating a lifespan of a lithium-sulfur battery of the following embodiments.

The method for evaluating the lifespan of the lithium-sulfur battery according to a twelfth embodiment is a method for evaluating the lifespan of the lithium-sulfur battery, preferably according to the first to twelfth embodiments,
wherein the lithium-sulfur battery comprises an electrode assembly, an electrolyte solution, and a case accommodating the electrode assembly, wherein the electrode assembly comprises:
a positive electrode comprising a sulfur-carbon composite,
a negative electrode, and
a separator interposed between the positive electrode and the negative electrode;

wherein the negative electrode comprises a lithium-containing layer; and a solid electrolyte interphase (SEI) layer on at least one surface of the lithium-containing layer;
wherein optionally the electrolyte solution contains 1 weight% or more of a nitrogen compound based on the total weight of the electrolyte solution;
wherein the evaluation method comprises the steps of:
   - activating the lithium-sulfur battery by charging and discharging,
      and then charging the lithium-sulfur battery to a SOC 100,
   - determining the content of sulfur (S) of the negative electrode,
   wherein the sulfur (S) content of the negative electrode is 3 weight% or less based on a total weight of the negative electrode.

According to a thirteenth embodiment, in the twelfthembodiment, the lithium-sulfur battery was activated by discharging at a 0.5 C discharge rate and charging at a 0.3 C charge rate in a range between 1.8 V and 2.5 V at a temperature from 23 °C to 25 °C.

According to a fourteenth embodiment, in any one of the twelfth to fourteenth embodiments, the lithium-sulfur battery may have a lifespan of 190 or more cycles over repeated charge and discharge cycles at 0.3 to 0.5 C rate in a range between 1.8 V and 2.5 V at a temperature from 23 °C to 25 °C.

### Advantageous Effects

According to an aspect, the lithium-sulfur battery of the present disclosure may exhibit improved capacity retention over repeated charge and discharge.

For example, the lithium-sulfur battery of the present disclosure may retain 80% or more of the initial capacity after 190 or more charge/discharge cycles.

According to an aspect, the lithium-sulfur battery of the present disclosure may have high energy density. In particular, the lithium-sulfur battery of the present disclosure may have the energy density of 300 Wh/kg or more.

The present disclosure, thus provides a lithium-sulfur battery having long life characteristics, while having high energy density.

### BEST MODE

Hereinafter, the present disclosure will be described in more detail.

It should be understood that the terms or words used in the specification and the appended claims should not be construed as limited to general and dictionary meanings, but rather interpreted based on the meanings and concepts corresponding to the technical aspects of the present disclosure on the basis of the principle that the inventor is allowed to define terms appropriately for the best explanation.

Unless otherwise restricted, a detailed description defining or specifying the elements may be applied to all inventions and is not limited to descriptions of particular inventions. That is, the present disclosure also refers to combinations of the embodiments even if they are disclosed separately.

The terminology as used herein is used to describe a specific embodiment and is not intended to limit the present disclosure. The singular form includes the plural form unless the context clearly indicates otherwise. It should be further understood that 'comprise' or 'include' when used in the specification, specifies the presence of stated features, integers, steps, operations, elements, components or a combination thereof, and unless expressly stated otherwise, does not preclude the presence or addition of one or more other functions, integers, steps, operations, elements, components or a combination thereof.

Additionally, the terms "about" and "substantially" as used herein are used in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

Throughout the specification, "A and/or B" refers to either A or B or both.

The term "composite" as used herein refers to a material with physically • chemically different phases and more effective functions, formed by combining two or more materials.

The term "(poly)sulfide" as used herein is the concept that covers "(poly)sulfide ion (Sₓ²⁻, 1≤x≤8)" and "lithium (poly)sulfide (Li₂Sₓ or Li₂Sₓ⁻ 1≤x≤8)".

The term "polysulfide" as used herein is the concept that covers "polysulfide ion (Sₓ²⁻, 1<x≤8)" and "lithium polysulfide (Li₂Sₓ or Li₂Sₓ⁻ 1<x≤8)".

Lithium-sulfur batteries exhibit lower battery capacity than the theoretical capacity due to the elution of lithium (poly)sulfide produced by reduction reaction of sulfur (S₈) from the positive electrode into the electrolyte solution during charging • discharging.

According to an aspect of the present disclosure, there is provided a lithium-sulfur battery having long lifespan, to be specific, the outstanding capacity retention after the repeated charge/discharge.

The lithium-sulfur battery according to an aspect of the present disclosure comprises an electrode assembly comprising a positive electrode comprising a sulfur-carbon composite, a negative electrode and a separator interposed between the positive electrode and the negative electrode; an electrolyte solution; and a case accommodating the electrode assembly.

In this instance, the negative electrode comprises a lithium-containing layer; and a solid electrolyte interphase (SEI) layer on at least one surface of the lithium-containing layer, and the electrolyte solution contains 1 weight% or more of a nitrogen compound based on the overall weight of the electrolyte solution.

It has been surprisingly found, that when the above-described amount of a nitrogen compound is included in electrolyte solution, the lithium-sulfur battery has improved lifespan and a lithium-sulfur battery with long life characteristics can be provided. Without being bound by any theory, the above-described amount of a nitrogen compound has been found to minimize the formation of sulfur compounds at the negative electrode, especially when the lithium-sulfur battery has been used for a higher number of charge and discharge cycles, like 190 or more cycles, preferable 195 or more cycles. It is believed that through the minimized formation of sulfur at the negative electrode, the lifespan of the lithium sulfur battery can be enhanced.

Furthermore, the nitrogen compound included in the above-described amount may improve the electrical conductivity of the electrolyte solution comprising the lithium salt and increase the lifespan of the lithium-sulfur battery.

Specifically, the efficacy of the nitrogen compound is not limited thereto, but for example, the nitrogen compound included in the above-described amount may suppress the reduction reaction of (poly)sulfide produced during charging/discharge of the lithium-sulfur battery, thereby preventing irreversible consumption of (poly)sulfide, leading to improved performance of the lithium-sulfur battery.

Furthermore, when the nitrogen compound is included in the above-described amount, the nitrogen compound may improve the electrical conductivity of the electrolyte solution and suppress the reduction reaction of (poly)sulfide, especially at the negative electrode, when used in the lithium-sulfur battery, but the present disclosure is not limited thereto.

In an embodiment of the present disclosure, the nitrogen compound is not limited to a particular type and may include those which stably form the SEI layer of the negative electrode and improve the charge • discharge efficiency, and may include, for example, a nitric acid compound, a nitrous acid-based compound or a mixture thereof.

In an embodiment of the present disclosure, the nitrogen compound may be, for example, selected from the group consisting of an inorganic nitric acid or nitrous acid compound such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂), ammonium nitrite (NH₄NO₂); an organic nitric acid or nitrous acid compound such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; an organic nitro compound such as nitromethane, nitropropane, nitrobutane, nitrobenzene, dinitrobenzene, nitro pyridine, dinitro pyridine, nitrotoluene, dinitrotoluene and a combination thereof, and preferably, may comprise lithium nitrate.

In one embodiment of the present disclosure, the nitrogen compound is lithium nitrate (LiNO₃).

In an embodiment of the present disclosure, the nitrogen compound, preferably lithium nitrate (LiNO₃), may be, for example, included in an amount of 1 weight% to 10 weight%, 1.5 weight% to 8 weight%, 1.8 weight% to 6 weight%, 2.0 weight% to 5.5 weight%, 2.1 weight% to 5.0 weight%, based on the total weight of the electrolyte solution, but is not limited thereto. In a special embodiment of the present disclosure, the nitrogen compound, preferably lithium nitrate (LiNO₃), may be, for example, included in an amount of more than 2.1 weight% to 10 weight%, 2.5 weight% to 8 weight%, more than 3.5 weight% to 6 weight%, 5 weight% to 6 weight%, based on the total weight of the electrolyte solution, but is not limited thereto. In a further embodiment of the present disclosure, 2.0 weight% to 4.0 weight%, 2.0 weight% to 3.0 weight% based on the total weight of the electrolyte solution, but is not limited thereto. In yet a further embodiment of the present disclosure, 2.5 weight% to 4.9 weight%, 3.0 weight% to 4.0 weight% based on the total weight of the electrolyte solution, but is not limited thereto. When the nitrogen compound is included in the above-described amount, the nitrogen compound may improve the electrical conductivity of the electrolyte solution and suppress the reduction reaction of (poly)sulfide when used in the lithium-sulfur battery, but the present disclosure is not limited thereto. Thus, a lithium-sulfur battery with long life characteristics, while having high energy density, is provided.

The negative electrode comprises sulfur (S) in a range between 0 weight% and 3 weight% based on the total weight of the negative electrode at the state of charge (SOC) 100.

As described above, the lithium-sulfur battery comprises inorganic sulfur (S₈) as the positive electrode active material. In the lithium-sulfur battery, lithium (poly)sulfide is produced through reduction reaction at the positive electrode during discharging. When the produced lithium (poly)sulfide is dissolved by the electrolyte solution and eluted into the electrolyte solution from the positive electrode, and the eluted lithium (poly)sulfide reacts with the lithium metal of the negative electrode, causing lithium sulfide precipitation on the surface of the negative electrode, inducing sulfur (S) passivation. It may cause damage to the negative electrode, resulting in life reduction of the lithium-sulfur battery.

Referring to this mechanism, the "sulfur-based compound" as used herein refers collectively to any material containing sulfur (S) derived from the positive electrode active material of the lithium-sulfur battery. The sulfur-based compound may comprise, for example, any sulfur containing compound that may be formed through reduction reaction of inorganic sulfur (S₈) or oxidation reaction of lithium sulfide (Li₂S), and more specifically, may comprise at least one of inorganic sulfur (S₈), lithium (poly)sulfide (Li₂Sₓ, 1 ≤ x ≤ 8), disulfide compounds, carbon-sulfur polymer ((C₂S_{y})ₙ, y = 2.5 to 50, n≥2) or lithium sulfide (Li₂S).

In one embodiment of the present invention, for convenience of description, the lithium sulfide (Li₂S) may be included in lithium (poly)sulfide (Li₂Sₓ, x=1), and in this case, it can be expressed by the chemical formula of the lithium (poly)sulfide of Li₂Sx, 1 ≤ x ≤ 8. Thus, in the present invention the term lithium (poly)sulfide may not be limited to lithium sulfide compounds containing more than one sulfide, but may include also lithium sulfide, like Li₂S. Accordingly, in one embodiment of the present invention, the sulfur-based compound may include, for example, inorganic sulfur (S₈), lithium (poly)sulfide (Li₂Sₓ, 1 ≤ x ≤ 8), or two or more thereof, like preferably inorganic sulfur (S₈), Li₂S, lithium polysulfide (Li₂Sₓ, 1 < x ≤ 8), or two or more thereof.

According to an aspect of the present disclosure, the range of sulfur (S) content in the negative electrode at SOC 100, i.e., when the lithium-sulfur battery is fully charged is newly proposed.

Specifically, according to an aspect of the present disclosure, there is provided the lithium-sulfur battery having the sulfur (S) content of preferably in a range between 0.1 weight% and 3 weight%, even more preferably in a range between 0.1 weight% and 2 weight%, especially more preferably in a range between 0.1 weight% and 1 weight%, even especially more preferably in a range between 0.1 weight% and 0.5 weight%, based on the total weight of the negative electrode at SOC 100, i.e. when it is fully charged.

The negative electrode comprises the lithium containing layer, preferably lithium alloy foil or lithium foil, more preferably lithium foil; and the SEI layer on at least one surface of the lithium-containing layer, and to achieve long life characteristics of the lithium-sulfur battery, the sulfur(S) content is limited to be a range between 0 weight% and 3 weight%, preferably in a range between 0.1 weight% and 3 weight%, even more preferably in a range between 0.1 weight% and 2 weight%, especially more preferably in a range between 0.1 weight% and 1 weight%, even especially more preferably in a range between 0.1 weight% and 0.5 weight%, based on the sum of weights of the lithium-containing layer and the SEI layer.

In an embodiment of the present disclosure, the lithium-containing layer may comprise the negative electrode active material of the lithium-sulfur battery, for example, lithium metal, and its thickness may be, for example, 140 *µ*m or less.

In an embodiment of the present disclosure, the thickness of the lithium-containing layer, preferably lithium alloy foil or lithium foil, more preferably lithium foil, may be 140 *µ*m or less, specifically 100 *µ*m or less, and more specifically 80 *µ*m or less, or 70 *µ*m or less. For example, the thickness of the lithium-containing layer, preferably lithium alloy foil or lithium foil, more preferably lithium foil may be 20 *µ*m to 140 *µ*m, 20 *µ*m to 100 *µ*m, specifically 30 *µ*m to 80 *µ*m, 40 *µ*m to 70 *µ*m, 50 *µ*m to 70 *µ*m, 50 *µ*m to 65 *µ*m, or 55 *µ*m to 60 *µ*m.

In an embodiment of the present disclosure, when the thickness of the lithium foil is in the above-described range, there may be an advantage in terms of the weight and energy density of the battery.

In the present disclosure, the thickness of the lithium-containing layer may be measured through known means for measuring the thickness of each component of the battery, and for example, may be measured using Mitutoyo's thickness measurement machine, but is not limited thereto. In the present disclosure, the thickness of the lithium-containing layer may be measured by laser scan micrometer according to ASTM D374.

In an embodiment of the present disclosure, the SEI layer is a thin passivation layer formed on the surface of the lithium-containing layer, preferably lithium alloy foil or lithium foil, more preferably lithium foil, during charging in the activation process of the lithium-sulfur battery, and may protect the lithium metal and suppress the electrolyte decomposition, but the present disclosure is not limited thereto.

In an embodiment of the present disclosure, the total thickness of the negative electrode comprising the lithium-containing layer, preferably lithium alloy foil or lithium foil, more preferably lithium foil, and the SEI layer may be 150 *µ*m or less, specifically 120 *µ*m or less, more specifically 100 *µ*m or less, even more specifically 70 *µ*m or less, like preferably in the range between 120 *µ*m and 40 µm, more preferably in a range between 70 µm and 40 µm, even more preferably between 65 µm and 55 µm.

In other words, the thickness of the negative electrode is 120 *µ*m or less, 70 *µ*m or less, preferably in a range between 120 *µ*m and 40 µm, more preferably in a range between 70 *µ*m and 40 µm, even more preferably between 65 µm and 55 µm.

In the present disclosure, the thickness of the negative may be measured through known means for measuring the thickness of each component of the battery, and for example, may be measured using Mitutoyo's thickness measurement machine, but is not limited thereto. In one embodiment, In the present disclosure, the thickness of the negative electrode may be measured according to ASTM D374.

The negative electrode may have the sulfur (S) content of 3 weight% or less based on the sum of weights of sulfur (S) and lithium (Li) in the negative electrode. For example, the negative electrode may have the sulfur (S) content of 3 weight% or less, 2 weight% or less, 1 weight% or less, or 0.5 weight% or less based on the sum of weights of sulfur (S) and lithium (Li) in the negative electrode. More specifically, in a range between 0 weight% and 3 weight%, more preferably in a range between 0.1 weight% and 3 weight%, even more preferably in a range between 0.1 weight% and 2 weight%, especially more preferably in a range between 0.1 weight% and 1 weight%, even especially more preferably in a range between 0.1 weight% and 0.5 weight%, based on the sum of weights of sulfur (S) and lithium (Li) in the negative electrode at SOC 100, i.e. when it is fully charged.

In this instance, 0 weight% indicates not only non sulfur (S) but also trace amounts of sulfur measured to be 0 weight% due to the limit of quantifiable measurements or measurement error, so that it may be like 0.1 weight% based on the total weight of the negative electrode.

In one embodiment of the present disclosure, the amount of the lithium (Li) in the negative electrode is 96 weight% or more, preferably 99 weight% or more, like in a range between 96 weight% and 100 weight%,, preferably in a range between 96 weight% and 99.9 weight%, more preferably in a range between 99 weight% and 99.9 weight% based on the sum of weights of sulfur (S) and the lithium (Li) in the negative electrode. The lithium-sulfur battery may achieve long life characteristics when the lithium content in weight% based on the amount of sulfur (S) and lithium (Li) in the negative electrode is in the above indicated weight% at SOC 100, i.e. when it is fully charged. In an embodiment of the present disclosure, the SEI layer may change in composition depending on the composition of a lithium salt and an additive used in the electrolyte solution of the lithium-sulfur battery, and is not limited to a particular composition.

In an embodiment of the present disclosure, the SEI layer may contain, for example, a Li-F functional group.

In an embodiment of the present disclosure, the element contained in the negative electrode comprising the lithium-containing layer, preferably lithium alloy foil or lithium foil, more preferably lithium foil, and the SEI layer at SOC 100 in the lithium-sulfur battery may comprise sulfur (S), lithium (Li) and fluorine (F).

In an embodiment of the present disclosure, the lithium-sulfur battery may have the sulfur (S) content of 3 weight% or less, 2 weight% or less, 1 weight% or less, or 0.5 weight% or less based on the sum of weights of sulfur (S), lithium (Li) and fluorine (F) in the negative electrode at SOC 100, i.e., when it is fully charged. In this instance, 0 weight% indicates not only no sulfur (S), but also trace amounts of sulfur measured to be 0 weight% due to the limit of quantifiable measurements or measurement error, as it is described above.

In an embodiment of the present disclosure, the SEI layer may comprise, for example, a composite formed by chemical reaction of a nitrogen compound, preferably LiNO₃, of the electrolyte solution as described above and the lithium metal. The nitrogen compound, preferably LiNO₃, of the electrolyte solution may be an additive in the electrolyte solution. In this instance, the SEI layer may comprise nitrogen (N) obtained from the nitrogen compound of the electrolyte solution.

Accordingly, in an embodiment of the present disclosure, the lithium-sulfur battery has the sulfur (S) content of 3 weight% or less, 2 weight% or less, 1 weight% or less, or 0.5 weight% or less based on the sum of weights of sulfur (S), lithium (Li) and nitrogen (N) in the negative electrode at SOC 100, i.e., when it is fully charged. In this instance, 0 weight% indicates not only no sulfur (S), but also trace amounts of sulfur measured to be 0 weight% due to the limit of quantifiable measurements or measurement error.

In another embodiment of the present disclosure, the lithium-sulfur battery may have the sulfur (S) content of 3 weight% or less, 2 weight% or less, 1 weight% or less, 0.5 weight% or less or 0 weight% based on the sum of weights of sulfur (S), lithium (Li), fluorine (F) and nitrogen (N) in the negative electrode at SOC 100, i.e., when it is fully charged.

Subsequently, a method for measuring the sulfur (S) content in the negative electrode will be described.

In an embodiment of the present disclosure, the SOC 100 may indicate, for example, the state of charge with the potential of 2.4 V to 2.7 V. Specifically, the SOC 100 may indicate the state of charge with the potential of 2.5 V.

Specifically, the sulfur (S) content in the negative electrode at SOC 100 may be measured through elemental analysis after disassembling the lithium-sulfur battery fully charged, for example, charged up to 2.4 V to 2.7 V, specifically 2.5 V and cleaning to remove the electrolyte solution from the negative electrode.

In an embodiment of the present disclosure, the elemental analysis may be performed, for example, using ion chromatography (IC) analysis, inductively coupled plasma optical emission spectrometer (ICP-OES) analysis, elemental analyzer (EA) analysis, ONH analysis or the like, but the elemental analysis method is not limited thereto. Thus, the sulfur (S) content in the negative electrode based on the total weight of the negative electrode at the state of charge (SOC) 100 or based on the sum of weights of sulfur (S) and lithium (Li) in the negative electrode at the state of charge (SOC) 100 may be measured by elemental analysis, preferably measured by ICP-OES.

In one embodiment of the present disclosure, the lithium-sulfur battery was activated prior to the measurement of the sulfur (S) content by discharging at a 0.5 C discharge rate and charging at a 0.3 C charge rate in a range between 1.8 V and 2.5 V at room temperature, preferably the room temperature is from 23 °C to 25 °C, for at least one cycle, preferably for at least 5 cycles, more preferably for at least 10 cycles, even more preferably for 10 cycles.

As described above, the conventional lithium-sulfur battery degrades over the repeated charge/discharge cycles due to sulfur (S) passivation on the negative electrode by the sulfur-based compound derived from the positive electrode during discharging, but according to an aspect of the present disclosure, it may be possible to provide the lithium-sulfur battery having long lifespan by limiting the upper limit of the sulfur (S) content in the negative electrode at SOC 100, i.e., when fully charged, to 3 weight% or less, specifically 2 weight% or less, 1 weight% or less, or 0.5 weight% or less.

Subsequently, each component of the lithium-sulfur battery other than the negative electrode will be described in detail.

### Positive electrode

In an embodiment of the present disclosure, the positive electrode may comprise a positive electrode current collector and a positive electrode active material layer coated on one or two surfaces of the positive electrode current collector.

The positive electrode current collector is not limited to a particular type and may include those which support the positive electrode active material, and have high conductivity without causing a chemical change to the battery. For example, the positive electrode current collector may include copper, stainless steel, aluminum, nickel, titanium, palladium, sintered carbon or copper or stainless steel treated with carbon, nickel or silver on the surface, and an aluminum-cadmium alloy.

The positive electrode current collector may have microtexture on the surface to enhance the bonding strength with the positive electrode active material, and may come in various forms, for example, a film, a sheet, a foil, a mesh, a net, a porous body, a foam and a nonwoven.

The positive electrode active material layer comprises the positive electrode active material, and may further comprise a conductive material, a binder and an additive.

In an embodiment of the present disclosure, the positive electrode active material comprises the sulfur-carbon composite.

In an embodiment of the present disclosure, the sulfur-carbon composite may comprise a porous carbon material; and a sulfur-based compound loaded onto at least one of the inside of the pores of the porous carbon material or the outer surface of the porous carbon material. Since sulfur used as the positive electrode active material does not have electrical conductivity itself, sulfur may be used in combination with a conductive material such as a carbon material, and the porous carbon material may be used as a sulfur host. Additionally, the sulfur-based compound may be added as the positive electrode active material, and may comprise, for example, at least one of inorganic sulfur (S₈), lithium (poly)sulfide (Li₂Sₓ, 1≤ x ≤ 8), disulfide compounds, carbon-sulfur polymer ((C₂S_{y})ₙ, y = 2.5 to 50, n≥2) or lithium sulfide (Li₂S). Preferably, the sulfur-based compound may be inorganic sulfur (S₈).

In an embodiment of the present disclosure, the porous carbon material is not limited to a particular type and may include any type of porous carbon material that can load the sulfur-based compound as the positive electrode active material, provide the skeleton for immobilizing the sulfur-based compound uniformly and stably, and improve the conductivity of the positive electrode.

In general, the porous carbon material may be manufactured by carbonizing precursors of various carbon materials. The porous carbon material may include irregular pores. The average diameter of the pores may be in a range between 1 and 200 nm, and the porosity may be in a range between 10 and 90 volume% of the total volume of the porous carbon material. In case that the average diameter of the pores is less than the above-described range, the pore size is at molecular level, which makes sulfur infiltration impossible, and on the contrary, in case that the average diameter of the pores is beyond the above-described range, the porous carbon material has low mechanical strength, which is unfavorable to use in the electrode manufacturing process.

In an embodiment of the present disclosure, the 'average diameter of the pores' may be measured by known methods for measuring the pore diameter of porous materials, and the measurement method is not limited to a particular method. For example, the pore diameter may be measured by scanning electron microscopy (SEM), field-emission microscopy (FEM), the laser diffraction method or the Brunauer-Emmett-Teller (BET) method. The measurement using the laser diffraction method may use, for example, commercially available laser diffraction particle size measurement machine (for example Microtrac MT 3000). Additionally, the measurement by the BET method may, for example, use BEL Japan's BELSORP series analyzer, but is not limited thereto.

In an embodiment of the present disclosure, the 'porosity' refers to a fraction of voids in a structure over the total volume and is indicated in %, and may be used interchangeably with void fraction, degree of porosity or the like. In the present disclosure, the porosity measurement is not limited to a particular method, and according to an embodiment of the present disclosure, for example, the porosity may be measured by the BET method using nitrogen gas or Hg porosimeter and ASTM D2873.

The shape of the porous carbon material may be spherical, rod-like, needle-like, platy, tubular or bulky, and may include, without limitation, any shape commonly used in the lithium-sulfur battery.

The porous carbon material may include any carbon material having a porous structure or a high specific surface area commonly used in the corresponding technical field. For example, the porous carbon material may include at least one selected from the group consisting of graphite; graphene; carbon black including denka black, acetylene black, ketjen black, channel black, furnace black, lamp black, thermal black; carbon nanotubes (CNT) including single-walled carbon nanotubes (SWCNT) and multi-walled carbon nanotubes (MWCNT); carbon fibers including graphite nanofibers (GNF), carbon nanofibers (CNF) and activated carbon fibers (ACF); graphite including natural graphite, artificial graphite, expandable graphite and activated carbon, but is not limited thereto. Preferably, the porous carbon material may be carbon nanotubes.

In an embodiment of the present disclosure, the porous carbon material may comprise, for example, carbon nanotubes (CNT).

In an embodiment of the present disclosure, the sulfur-carbon composite may, for example, have a sulfur/carbon weight ratio (S/C weight ratio) of 5 or less, and more specifically 4 or less. For example, the sulfur-carbon composite may have the S/C weight ratio of 2.3. The S/C weight ratio may be calculated from the weight of sulfur in gram (g) of the sulfur-carbon composite and from the weight of carbon in gram (g) of the sulfur-carbon composite. Alternatively, the S/C weight ratio may be calculated from the weight% of sulfur based on the total amount of the sulfur-carbon composite and from the weight% of carbon based on the total amount of the sulfur-carbon composite. The sulfur/carbon weight ratio (S/C weight ratio) may be dimensionless.

In a preferred embodiment of the present disclosure, the sulfur-carbon composite may have a sulfur/carbon weight ratio (S/C weight ratio) in the range between 0.5 and 5.0.

In a preferred embodiment of the present disclosure, the sulfur-carbon composite may have a sulfur/carbon weight ratio (S/C weight ratio) in the range between 0.5 and 4.0, between 1.0 and 3.0, between 1.5 and 2.5, between 2.0 and 2.45, between 2.25 and 2.35, like between 2.3 and 3. The S/C weight ratio may be obtained from the S₈/ conductive material,weight ratio, when the lithium-sulfur battery is manufactured, wherein the conductive materials is preferably CNT, as discussed below.

When the S/C ratio of the sulfur-carbon composite is in the above-described range, it may be desirable in terms of the sulfur-carbon composite's ability to transport electrons (conductivity) and electrochemical specific surface area, and for example, the larger surface area of the sulfur-carbon composite may suppress the elution of sulfur from the positive electrode more effectively, but the present disclosure is not limited thereto.

The method for manufacturing the sulfur-carbon composite is not limited to a particular method in the present disclosure and may include methods commonly used in the corresponding technical field. For example, the sulfur-carbon composite may be manufactured by simply mixing the sulfur with the porous carbon material and performing thermal treatment to create a composite.

In addition to the above-described composition, the positive electrode active material may further comprise at least one selected from transition metals, Group IIIA elements, Group IVA elements, sulfur compounds of these elements, or alloys of these elements and sulfur.

The transition metals may comprise Sc, Ti, V, Cr, Mn, Fe, Co, Ni, Cu, Zn, Y, Zr, Nb, Mo, Tc, Ru, Rh, Pd, Os, Ir, Pt, Au or Hg, the Group 13 elements may comprise Al, Ga, In, Ti, and the Group 14 elements may comprise Ge, Sn, Pb.

In an embodiment of the present disclosure, the sulfur-carbon composite may be included in an amount of 50 weight% or more based on the total weight of the positive electrode. Specifically, the sulfur-carbon composite may be, for example, included in an amount of 80 weight% or more, 90 weight% or more, or 95 weight% or more based on the total weight of the positive electrode active material layer. Specifically, the sulfur-carbon composite may be included in an amount of 80 weight% to 100 weight%, more specifically 85 weight% to 99 weight%, 90 weight% to 99 weight%, 95 weight% to 98 weight%, or 95 weight% to 97 weight%, or 96 weight% based on the total weight of the positive electrode active material layer. The above-described amount of sulfur-carbon composite may refer to the amount of when the lithium-sulfur battery is manufactured. The above-described amount of sulfur-carbon composite maybe measured when the lithium sulfur battery is disassembled at a SOC100 and the positive electrode is analyzed by elemental analysis, similar to the measurement of the sulfur (S) content in the negative electrode. When the amount of the sulfur-carbon composite is less than the above-described range, the larger amount of the subsidiary material such as the conductive material and the binder and the smaller amount of the sulfur-carbon composite makes it difficult to realize the battery with high capacity and high energy density, and on the contrary, when the amount of the sulfur-carbon composite is above the above-described range, the amount of the conductive material or the binder as described below is relatively insufficient, resulting in degradation of the physical properties of the electrode.

The conductive material may be a material that serves as a movement pathway of electrons from the current collector to the positive electrode active material by electrically connecting the electrolyte to the positive electrode active material, and may include, without limitation, any material having conductive properties as a constituent component of the electrode that is physically different from carbon contained in the sulfur-carbon composite.

In an embodiment of the present disclosure, the conductive material may include, for example, carbon black such as Super-P, denka black, acetylene black, ketjen black, channel black, furnace black, lamp black, thermal black, carbon black; carbon derivatives such as carbon nanotubes or fullerene; conductive fibers such as carbon fibers or metal fibers; metal powder such as fluorocarbon, aluminum, nickel powder; or conductive polymer such as polyaniline, polythiopene, polyacetylene, polypyrrole, either used alone or in combination.

In an embodiment of the present disclosure, the amount of the conductive material may be 0 to 40 weight%, for example, 1 to 40 weight%, 15 to 40 weight%, 20 to 40 weight%, 25 to 35 weight%, based on the total weight of the positive electrode active material. When the amount of the conductive material is less than the above-described range, voltage and capacity reduces due to poor electron transport between the positive electrode active material and the current collector. On the contrary, when the amount of the conductive material is more than the above-described range, a ratio of the positive electrode active material decreases, resulting in reduced total energy (amount of electric charge) of the battery, and thus it is desirable to determine an optimal amount in the above-described range.

In an embodiment of the present disclosure, the binder may be used to bind the positive electrode active material to the positive electrode current collector, and connect the positive electrode active material in an organic manner to improve the bonding strength, and may include any binder commonly used in the corresponding technical field.

For example, the binder may include one selected from the group consisting of a fluororesin-based binder including polyvinylidene fluoride-based polymer comprising at least one repeat unit of polyvinylidene fluoride (PVdF), vinylidene fluoride, polytetrafluoroethylene (PTFE) or a mixture thereof; a rubber-based binder including styrene butadiene rubber (SBR), acrylonitrile-butadiene rubber, styrene-isoprene rubber; an acrylic binder; a cellulose-based binder including carboxymethyl cellulose (CMC), starch, hydroxypropyl cellulose, regenerated cellulose; a polyalcohol-based binder; a polyolefin-based binder including polyethylene, polypropylene; a polyimide-based binder; a polyester-based binder; a silane-based binder; a polyacrylic acid-based binder; and a polyacrylonitrile-based binder, or a mixture or a copolymer thereof. In a preferred embodiment, the binder is polyacrylate (PAA).

In an embodiment of the present disclosure, the amount of the binder may be 1 to 10 weight% based on the total weight of the positive electrode active material layer. When the amount of the binder is less than the above-described range, the positive electrode active material and the conductive material may be debonded due to weak physical properties of the positive electrode, and when the amount of the binder is more than the above-described range, the lower ratio of the positive electrode active material and the conductive material in the positive electrode may reduce the battery capacity, and thus it is desirable to determine an optimal amount in the above-described range.

In the present disclosure, the method for manufacturing the positive electrode for the lithium secondary battery is not limited to a particular method, and may include methods known to those skilled in the art or a variety of modified methods.

For example, the positive electrode for the lithium secondary battery may be manufactured by preparing a positive electrode slurry composition comprising the above-described composition, and coating the composition on at least one surface of the positive electrode current collector to form the positive electrode active material layer.

The positive electrode slurry composition comprises the above-described positive electrode active material, and may further comprise the binder, the conductive material and a solvent.

The solvent includes any solvent that may uniformly disperse the positive electrode active material. The solvent may be preferably an aqueous solvent, most preferably, water, and in this instance, water may be distilled water, deionized water. The solvent is not limited thereto, and if necessary, may include lower alcohol that easily mixes with water. The lower alcohol may include methanol, ethanol, propanol, isopropanol and butanol, and preferably, they may be used in combination with water.

The solvent may be included in such an amount to ensure a sufficient level of viscosity to facilitate coating, and the amount of the solvent may change depending on the coating method and device.

The positive electrode slurry composition may further comprise a material commonly used to improve the function in the corresponding technical field, if necessary. For example, the positive electrode slurry composition may further comprise a viscosity adjusting agent, a glidant, fillers or the like.

The method for coating the positive electrode slurry composition is not limited to a particular method in the present disclosure, and for example, may include doctor blade, die casting, comma coating, screen printing. Additionally, the positive electrode slurry may be coated on the positive electrode current collector by forming on a substrate and pressing or lamination.

After the coating, a drying process may be performed to remove the solvent. The drying process may be performed at a sufficient level of temperature and time to remove the solvent, and the conditions may change depending on the type of the solvent and the present disclosure is not limited to a particular condition. For example, a drying method may include drying by warm air, hot air and low humidity air, vacuum drying, and drying by (far)infrared radiation and electromagnetic radiation. The drying speed is adjusted to remove the solvent as quickly as possible within a speed range for preventing cracking in the positive electrode active material layer or preventing the positive electrode active material layer from being peeled from the positive electrode current collector due to stress concentration.

In addition, after the drying, the current collector may be pressed to increase the density of the positive electrode active material in the positive electrode. The pressing may include mold pressing and roll pressing.

The positive electrode manufactured by the above-described composition and manufacturing method, specifically the positive electrode active material layer may have the porosity of 50 to 80 volume%, specifically 60 to 75 volume%. When the porosity of the positive electrode is less than 50 volume%, due to high filling of the positive electrode slurry composition comprising the positive electrode active material, the conductive material and the binder, it fails to maintain a sufficient quantity of electrolyte for ionic conductivity and/or electrical conductivity in the positive electrode active material, resulting in degradation of the output characteristics or cycling characteristics of the battery, and the problem with overvoltage and discharge capacity reduction of the battery gets worse. On the contrary, when the porosity of the positive electrode is higher than 80 volume%, too high porosity reduces the physical and electrical connection with the current collector, resulting in low adhesion strength and poor reaction, and high electrolyte filling reduces the energy density of the battery, and accordingly the porosity of the positive electrode is appropriately adjusted in the above-described range.

In one embodiment of the present disclosure, the loading amount of sulfur in the positive electrode was less than 3 mAh/cm², but above 0 mAh/cm², preferably in the range between 0.1 and 2.9 mAh/cm², more preferably in the range between 0.5 and 2.8 mAh/cm², even more preferably in the range between 1 and 2.7 mAh/cm², especially more preferably in the range between 1.5 and 2.6 mAh/cm², especially even more preferably in the range between 2.0 and 2.5 mAh/cm². The loading amount of sulfur may be a value calculated from the total weight of sulfur (S) contained as a positive electrode active material in the positive electrode and the capacity of the electrode calculated from this. In one embodiment, the weight of sulfur in the positive electrode may be measured from the positive electrode active material used during the manufacturing step, or may be measured through thermogravimetric analysis (TGA) on the positive electrode after manufacturing. In another embodiment, the fully charged lithium-sulfur battery is disassembled under an inert atmosphere to obtain a positive electrode, and then the positive electrode is washed and dried using an appropriate washing solvent, and then the positive electrode active material layer is scraped off. The content of sulfur (S) derived from the active material can be measured and calculated through thermogravimetric analysis (TGA) of the obtained result, but the measurement method is not limited to this.

### Negative electrode

The negative electrode comprises a lithium-containing layer. The negative electrode may comprise a negative electrode current collector and a negative electrode active material layer coated on one or two surfaces of the negative electrode current collector. Alternatively, the negative electrode may be a lithium-containing layer, preferably a lithium metal plate, a lithium alloy plate, preferably a lithium foil or a lithium alloy foil.

The negative electrode current collector is used to support the negative electrode active material layer and is the same as described in the positive electrode current collector.

In addition to the negative electrode active material, the negative electrode active material layer may comprise a conductive material and a binder. In this instance, the conductive material and the binder are the same as described above.

The negative electrode active material may comprise a material capable of reversible intercalation or deintercalation of lithium (Li⁺), a material that reversibly forms a lithium containing compound by reaction with lithium ion, a lithium metal or a lithium alloy.

The material capable of reversible intercalation or deintercalation of lithium ion (Li⁺) may be, for example, crystalline carbon, amorphous carbon or a mixture thereof. The material that reversibly forms the lithium containing compound by reaction with lithium ion (Li⁺) may be, for example, tin oxide, titanium nitrate or silicon. The lithium alloy may be, for example, an alloy of lithium (Li) and one or more metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn).

Preferably, the negative electrode active material may be a lithium-containing layer, preferably a lithium metal and / or a lithium metal alloy. Specifically, the negative electrode active material may be in the form of a lithium metal foil, a lithium alloy foil, a lithium metal powder, or a lithium alloy powder, preferably a lithium metal foil.

### Separator

The separator may comprise a porous non-conductive or insulating material that separates or insulates the positive electrode from the negative electrode, and allows lithium ion transport between the positive electrode and the negative electrode, and may include any separator commonly used in lithium secondary batteries without limitation. The separator may be a stand-alone member such as a film, and may be a coating layer added to the positive electrode and/or the negative electrode.

Preferably, the separator may have low resistance to electrolyte ion transport and high electrolyte wettability.

In an embodiment of the present disclosure, the separator may comprise a porous substrate, and the porous substrate may include any type of porous substrate commonly used in secondary batteries. The separator may include a porous polymer film either used alone or in stack, and for example, may include a nonwoven fabric made of high melting point glass fibers, polyethyleneterephthalate fibers or a polyolefin-based porous membrane, but is not limited thereto.

The porous substrate is not limited to a particular material in the present disclosure, and may include any porous substrate commonly used in electrochemical devices. For example, the porous substrate may comprise at least one material selected from the group consisting of polyolefin such as polyethylene, polypropylene, polyester such as polyethyleneterephthalate, polybutyleneterephthalate, polyamide, polyacetal, polycarbonate, polyimide, polyetheretherketone, polyethersulfone, polyphenyleneoxide, polyphenylenesulfide, polyethylenenaphthalene, polytetrafluoroethylene, polyvinylidene fluoride, polyvinyl chloride, polyacrylonitrile, cellulose, nylon, poly(p-phenylene benzobisoxazole) and polyarylate.

In an embodiment of the present disclosure, the thickness of the porous substrate is not limited to a particular range, but may be 1 to 100 *µ*m, preferably 5 to 50 *µ*m. The thickness range of the porous substrate is not limited to the above-described range, but when the thickness is too small below the above-described lower limit, the mechanical properties may degrade, causing damage to the separator during the use of the battery.

In an embodiment of the present disclosure, the average diameter and porosity of the pores present in the porous substrate are also not limited to a particular range, may be 0.001 to 50 *µ*m and 10 to 95 volume%, respectively.

In an embodiment of the present disclosure, the separator may further comprise a porous coating layer on at least one surface of the porous substrate, comprising inorganic particles and a binder.

In an embodiment of the present disclosure, the inorganic particles and the binder included in the porous coating layer are not limited to a particular type and may include those commonly used in the porous coating layer of the separator, and its manufacturing method is not limited to a particular method.

### Electrolyte solution

The electrolyte solution comprises a nonaqueous solvent as a medium for the movement of ions involved in the electrochemical reaction of the lithium-sulfur battery and a lithium salt as an electrolyte.

The electrolyte solution may include, without limitation, any composition used in the lithium secondary battery, specifically the lithium-sulfur battery.

In an embodiment of the present disclosure, the electrolyte solution may comprise the nonaqueous solvent, a nitrogen compound, the lithium salt and optionally the additive.

In an embodiment of the present disclosure, the electrolyte solution comprises a nonaqueous solvent, and two lithium salts, wherein the lithium salts are different from each other, wherein one lithium salt is a nitrogen containing lithium salt and is the nitrogen compound as it is defined above, preferably lithium nitrate. In an embodiment of the present disclosure, the nonaqueous solvent is not limited to a particular type and may include any type of solvent used in the lithium-sulfur battery, and may include, for example, an ether-based solvent, ester, amide, linear carbonate and cyclic carbonate.

In an embodiment of the present disclosure, the ester may include, for example, at least one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone and ε-caprolactone, but is not limited thereto.

In an embodiment of the present disclosure, the linear carbonate may typically include, for example, at least one selected from the group consisting of dimethyl carbonate, diethyl carbonate, dipropyl carbonate, ethylmethyl carbonate, methylpropyl carbonate and ethylpropyl carbonate, but is not limited thereto.

In an embodiment of the present disclosure, the cyclic carbonate may include, for example, at least one selected from the group consisting of ethylene carbonate, propylene carbonate, 1,2-butylene carbonate, 2,3-butylene carbonate, 1,2-pentylene carbonate, 2,3-pentylene carbonate, vinylene carbonate, vinylethylene carbonate and their halides. The halides may include, for example, fluoroethylene carbonate, but is not limited thereto.

In an embodiment of the present disclosure, the nonaqueous solvent may comprise an ether-based solvent.

In an embodiment of the present disclosure, the ether-based solvent may be included in an amount of 60 volume% or more, for example, 60 volume% to 100 volume%, 70 volume% to 100 volume%, 80 volume% to 100 volume%, 85 volume% to 100 volume%, 90 volume% to 100 volume%, 95 volume% to 100 volume%, 98 volume% to 100 volume%, 90 volume% to 98 volume%, or 90 volume% to 95 volume% based on the total volume of the nonaqueous solvent. When the amount of the ether-based solvent is in the above-described range based on the total volume of the nonaqueous solvent, it may be possible to improve the solubility of the constituents of the electrolyte solution such as the lithium salt, but the present disclosure is not limited thereto.

In an embodiment of the present disclosure, the ether-based solvent may comprise noncyclic ether, cyclic ether or a mixture thereof.

In an embodiment of the present disclosure, the noncyclic ether may comprise, for example, at least one selected from the group consisting of dimethyl ether, diethyl ether, dipropyl ether, dibutyl ether, diisobutyl ether, ethylmethyl ether, ethylpropyl ether, ethylterbutyl ether, dimethoxymethane, trimethoxymethane, dimethoxyethane, diethoxyethane, dimethoxypropane, diethyleneglycol dimethylether, diethyleneglycol diethylether, triethyleneglycol dimethylether, tetraethyleneglycol dimethylether, ethyleneglycol divinylether, diethyleneglycol divinylether, triethyleneglycol divinylether, dipropylene glycol dimethylene ether, butylene glycol ether, diethyleneglycol ethylmethylether, diethyleneglycol isopropylmethylether, diethyleneglycol butylmethylether, diethyleneglycol terbutylethylether and ethyleneglycol ethylmethylether. Preferably, the noncyclic ether may comprise at least one selected from the group consisting of dimethylether, dimethoxyethane, diethoxyethane, diethyleneglycol dimethylether, triethyleneglycol dimethylether and tetraethyleneglycol dimethylether, and more preferably dimethoxyethane.

In an embodiment of the present disclosure, the cyclic ether may comprise, for example, at least one selected from the group consisting of 2-methylfuran, 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4- dioxane, 1,2-dimethoxy benzene, 1,3-dimethoxy benzene, 1,4-dimethoxy benzene and isosorbide dimethyl ether. Preferably, the cyclic ether may comprise at least one selected from the group consisting of 2-methylfuran, 1,3-dioxolane, tetrahydrofuran, 2-methyltetrahydrofuran and 2,5-dimethyltetrahydrofuran, and more preferably 2-methylfuran.

In an embodiment of the present disclosure, the nonaqueous solvent may comprise a mixture of the noncyclic ether and the cyclic ether.

In an embodiment of the present disclosure, the nonaqueous solvent may comprise dimethoxyethane (DME) and 2-methylfuran (2-MeF).

In an embodiment of the present disclosure, a volume ratio (v/v) of the noncyclic ether and the cyclic ether may be 5:95 to 95:5 (v/v), specifically 95:5 to 50:50, and more specifically 90:10 to 70:30, 85:15 to 75:25 or 80:20. In the present disclosure, the volume ratio corresponds to a ratio of "volume% of the noncyclic ether":"volume% of the cyclic ether" in the ether-based solvent.

In an embodiment of the present disclosure, the nonaqueous solvent may not comprise the carbonate-based solvent in terms of the solubility of the electrolyte. Alternatively, the nonaqueous solvent may comprise the carbonate-based solvent in such a very small amount that the carbonate-based solvent does not affect the solubility of the lithium salt, and for example, when the nonaqueous solvent comprises the carbonate-based solvent, the amount of the carbonate-based solvent may be 3 weight% or less, 2 weight% or less, 1 weight% or less, 0.5 weight% or less or 0 weight% (i.e. none) based on the total weight of the electrolyte solution for the lithium secondary battery.

In an embodiment of the present disclosure, the lithium salt is not limited to a particular type and may include those used as electrolytes of lithium secondary batteries. The lithium salt may comprise, for example, at least one of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lower aliphatic lithium carboxylate, lithium tetraphenylborate, lithium imide, lithium nitrate (LiNO₃) or lithium nitrite (LiNO₂). Preferably, one or more, like one to three, or like one to two, lithium salts may be selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lower aliphatic lithium carboxylate, lithium tetraphenylborate, lithium imide, lithium nitrate (LiNO₃) and lithium nitrite (LiNO₃). Preferably, one lithium salt may be selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lower aliphatic lithium carboxylate, lithium tetraphenylborate, and lithium imide, preferably (CF₃SO₂)₂NLi; and another lithium salt may be selected from the group consisting of lithium nitrate (LiNO₃) and lithium nitrite (LiNO₂), preferably lithium nitrate (LiNO₃).

In one embodiment of the present disclosure, the one lithium salt selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lower aliphatic lithium carboxylate, lithium tetraphenylborate, and lithium imide, preferably (CF₃SO₂)₂NLi, may not contain nitrate.

In one embodiment of the present disclosure, the electrolyte solution comprises a nonaqueous solvent, lithium nitrate (LiNO₃), a lithium salt and optionally an additive.

In one embodiment of the present disclosure, one lithium salt does not contain nitrate.

In one specific embodiment of the present disclosure the electrolyte solution comprises a nonaqueous solution, lithium nitrate (LiNO₃) and (CF₃SO₂)₂NLi.

In an embodiment of the present disclosure, the concentration of the lithium salt may be properly determined in view of ionic conductivity and solubility, and may be, for example, 0.1 to 4M, preferably 0.25 to 2M, more preferably 0.5 to 1.5M, even more preferably 0.5 to 1.0M. When the concentration of the lithium salt is in the above-described range, it may be possible to ensure suitable ionic conductivity for the operation of the battery or appropriate viscosity of the electrolyte solution, thereby improving mobility of lithium ions and suppressing decomposition reaction of the lithium salt itself, but the present disclosure is not limited thereto.

In an embodiment of the present disclosure, the additive may improve the electrical conductivity of the electrolyte solution comprising the lithium salt and increase the lifespan of the lithium-sulfur battery.

In an embodiment of the present disclosure, the additive is not limited to a particular type and may include those which stably form the SEI layer of the negative electrode and improve the charge • discharge efficiency, and may include, for example, a nitric acid compound, a nitrous acid-based compound or a mixture thereof.

In an embodiment of the present disclosure, the additive may be, for example, selected from the group consisting of an inorganic nitric acid or nitrous acid compound such as potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₃), cesium nitrite (CsNO₂), ammonium nitrite (NH₄NO₂); an organic nitric acid or nitrous acid compound such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; an organic nitro compound such as nitromethane, nitropropane, nitrobutane, nitrobenzene, dinitrobenzene, nitro pyridine, dinitro pyridine, nitrotoluene, dinitrotoluene and a combination thereof.

In an embodiment of the present disclosure, the additive may be, for example, included in an amount of 1 weight% to 10 weight%, 2 weight% to 10 weight% or 3 weight% to 10 weight%, specifically 3 weight% to 8 weight%, 3 weight% to 6 weight% or 3 weight% to 5 weight% based on the total weight of the electrolyte solution, but is not limited thereto.

In one preferred embodiment of the present disclosure, the concentration of the nitrogen compound in the electrolyte solution is in the range between 0.15 and 1.5 mol/ L, preferably in the range between 0.20 and 1.0 mol/ L, more preferably in the range between 0.25 and 0.90 mol/ L, even more preferably in the range between 0.30 and 0.85 mol/ L.

When the nitrogen compound is included in the above-described amount, the nitrogen compound may improve the electrical conductivity of the electrolyte solution and suppress the reduction reaction of (poly)sulfide when used in the lithium-sulfur battery, but the present disclosure is not limited thereto. In case the nitrogen compound is also a lithium salt, e.g. LiNO₃, it may be also possible to ensure suitable ionic conductivity for the operation of the battery or appropriate viscosity of the electrolyte solution, thereby improving mobility of lithium ions and suppressing decomposition reaction of the lithium salt itself, in parallel to improving the electrical conductivity of the electrolyte solution and suppressing the reduction reaction of (poly)sulfide, when used in the lithium-sulfur battery but the present disclosure is not limited thereto. Thus, a lithium-sulfur battery with long life characteristics, while having high energy density, may be provided.

In one embodiment of the present disclosure, the ratio of the concentration of the lithium salt (mol/ L) and the concentration of the nitrogen compound (mol/ L) is in the range between 0.5 and 6.0, preferably in the range between 0.7 and 5.5, more preferably in the range between 0.9 and 4.8, even more preferably in the range between 0.9 and 2.3. In a special embodiment of the present disclosure, the ratio of the concentration of the lithium salt (mol/ L) and the concentration of the nitrogen compound (mol/ L) is in the range between 0.5 and 2.0, preferably in the range between 0.7 and 1.3, more preferably in the range between 0.9 and 1.1.

When the concentration of the lithium salt (mol/ L) and the concentration of the nitrogen compound (mol/ L) is in the above-described ratio, it may be possible to ensure suitable ionic conductivity for the operation of the battery or appropriate viscosity of the electrolyte solution, thereby improving mobility of lithium ions and suppressing decomposition reaction of the lithium salt itself, while the electrical conductivity of the electrolyte solution is improved and the reduction reaction of (poly)sulfide is suppressed, when used in the lithium-sulfur battery but the present disclosure is not limited thereto. Thus, a lithium-sulfur battery with long life characteristics, while having high energy density, may be provided.

In one embodiment of the present disclosure, the lithium concentration in the electrolyte solution, preferably obtained from the sum of the concentration of the lithium salt (mol/ L) in the electrolyte solution and the concentration of the nitrogen compound (mol/ L) in the electrolyte solution, is 0.4 mol/ L or more, 0.9 mol/ L or more, 1.0 mol/ L or more. Preferably, the lithium concentration in the electrolyte solution, preferably obtained from the sum of the concentration of the lithium salt (mol/ L) in the electrolyte solution and the concentration of the nitrogen compound (mol/ L) in the electrolyte solution, is in the range between 0.4 and 3.0 mol/L, between 0.9 and 2.5 mol/L, between 1.0 and 2.0 mol/L, between 1.05 and 1.8 mol/L, between 1.4 and 1.6 mol/L. When the lithium concentration in the electrolyte solution, preferably obtained from the sum of the concentration of the lithium salt (mol/ L) in the electrolyte solution and the concentration of the nitrogen compound (mol/ L) in the electrolyte solution, is in the above-described range, it may be possible to ensure suitable ionic conductivity for the operation of the battery or appropriate viscosity of the electrolyte solution, thereby improving mobility of lithium ions and suppressing decomposition reaction of the lithium salt itself, while the electrical conductivity of the electrolyte solution is improved and the reduction reaction of (poly)sulfide is suppressed, when used in the lithium-sulfur battery, but the present disclosure is not limited thereto. Thus, a lithium-sulfur battery with long life characteristics, while having high energy density, may be provided.

In an embodiment of the present disclosure, the lithium-sulfur battery may have varying energy density depending on the ratio of the electrolyte solution and the positive electrode active material. The smaller ratio of the electrolyte solution and the positive electrode active material, the higher energy density of the lithium-sulfur battery, and for example, the weight ratio (El/S weight ratio) of the electrolyte solution and sulfur in the sulfur-carbon composite may be 3.5 g/g or less.

In an embodiment of the present disclosure, the lithium-sulfur battery may be, for example, manufactured with the El/S ratio of 3.0 g/g or less, or 2.9 g or less.

It may be possible to achieve long life characteristics by limiting the sulfur (S) content in the negative electrode below 3 weight% at SOC 100 as described above according to an embodiment of the present disclosure.

In the present disclosure, long life characteristics of the lithium-sulfur battery represent high capacity retention after repeated charge/discharge cycles.

In an embodiment of the present disclosure, the lithium-sulfur battery may retain 80% or more of the initial capacity after the repeated 190 charge/discharge cycles. Specifically, the lithium-sulfur battery may have 80% or more of the capacity measured in one charge/discharge cycle after at least 190 repeated charge/discharge cycles at 0.3 to 0.5 C rate in a range between 1.8 V and 2.5 V at room temperature.

In an embodiment of the present disclosure, the room temperature may be, for example, 23°C to 25°C, and specifically 23°C.

In an embodiment of the present disclosure, the charge/discharge rate may be 0.3C rate or 0.5C rate, and may be, for example, the charge rate of 0.3 C and the discharge rate of 0.5C, but the charge/discharge rate is not limited to a particular rate and may include any rate of charge and discharge within the above-described rate range.

In an embodiment of the present disclosure, the energy density of the lithium-sulfur battery may be, for example, 300 Wh/kg or more.

In an embodiment of the present disclosure, the energy density of the lithium-sulfur battery may be measured by known methods, and the measurement method is not limited to a particular method. For example, the energy density of the lithium-sulfur battery may be, for example, measured by discharging at 0.5 C rate and charging at 0.3 C rate in a range between 1.8 V and 2.5 V at room temperature of 23°C.

In an embodiment of the present disclosure, the lithium-sulfur battery may have various shapes, and for example, coin, pouch type or cylindrical shape, but is not limited thereto.

According to another aspect of the present disclosure, there is provided a method for evaluating the lifespan of the lithium-sulfur battery.

In one embodiment of the present disclosure, a method for evaluating a lifespan of a lithium-sulfur battery is provided, wherein the lithium-sulfur battery comprises an electrode assembly, an electrolyte solution, and a case accommodating the electrode assembly, wherein the electrode assembly comprises:
a positive electrode comprising a sulfur-carbon composite,
a negative electrode, and
a separator interposed between the positive electrode and the negative electrode;

wherein the negative electrode comprises a lithium-containing layer; and a solid electrolyte interphase (SEI) layer on at least one surface of the lithium-containing layer;
wherein the electrolyte solution contains 1 weight% or more of a nitrogen compound based on the overall weight of the electrolyte solution;
wherein the evaluation method comprises the steps of:
   - activating the lithium-sulfur battery by charging and discharging,
and then charging the lithium-sulfur battery to a SOC 100,
   - determining the content of sulfur (S) of the negative electrode,
wherein the sulfur (S) content of the negative electrode is 3 weight% or less based on a total weight of the negative electrode.

The evaluation method comprises determining, as a long life lithium-sulfur battery, the lithium-sulfur battery having the sulfur (S) content of 3 weight% or less based on the total weight of the negative electrode at SOC 100.In one embodiment of the present disclosure, the lithium-sulfur battery is activated by charging and discharging for 1 to 20 cycles, preferably 5 to 15 cycles, more preferably10 cycles.

In one embodiment of the present disclosure, the lithium-sulfur battery is activated by charging and discharging at 0.5 C discharge rate and 0.3 C charge rate.

In one embodiment of the present disclosure, the lithium-sulfur battery is activated by charging and discharging in a range between 1.8 V and 2.5 V.

In one embodiment of the present disclosure, the lithium-sulfur battery is activated by charging and discharging at room temperature, preferably the room temperature is from 23 °C to 25 °C, more preferably 23 °C.

In one preferred embodiment of the present disclosure, the lithium-sulfur battery was activated by discharging at a 0.5 C discharge rate and charging at a 0.3 C charge rate in a range between 1.8 V and 2.5 V at room temperature, preferably the room temperature is from 23 °C to 25 °C.
In an embodiment of the present disclosure, the content of sulfur (S) of the negative electrode was determined by measuring the amount of sulfur (S) of the negative electrode by ICP-OES.

In one embodiment of the present disclosure, the content of sulfur (S) of the negative electrode is determined by disassembling the lithium sulfur battery, especially when the lithium sulfur battery had a state of charge (SOC) of 100, as it is further defined above and isolating the negative electrode and measuring the amount of sulfur by a measurement method as it is described above.

In an embodiment of the present disclosure, the lithium-sulfur battery may be, for example, a battery having the lifespan of 190 or more cycles, preferably 220 or more cycles, after repeated charge/discharge cycles at 0.5 C rate in a range between 1.8 V and 2.5 V at room temperature, preferably the room temperature is from 23 °C to 25 °C.

Hereinafter, examples will be described to help an understanding of the present disclosure, but the following examples are provided by way of illustration and it is obvious to those skilled in the art that various changes and modifications may be made thereto within the technical aspect and scope of the present disclosure and such changes and modifications fall within the scope of the appended claims.

### [Manufacture of lithium-sulfur battery]

### Example 1

Inorganic sulfur (S₈) and carbon nanotubes (CNT) as a positive electrode active material were mixed to prepare a sulfur-carbon composite (S/C weight ratio = 2.3), and 96 weight% of the prepared sulfur-carbon composite and 4 weight% of polyacrylate (PAA) as a binder were mixed to prepare a positive electrode slurry composition. The positive electrode slurry composition was coated on an aluminum current collector and dried to manufacture a positive electrode. The loading amount of the manufactured positive electrode was 2.08 mg(s)/cm² (2.5 mAh/cm²).

For a negative electrode, a 60 *µ*m thick lithium metal was used.

The positive electrode and the negative electrode were placed facing each other with a polyethylene separator having the thickness of 16 *µ*m and porosity of 46 vol% interposed between to prepare an electrode assembly.

The prepared electrode assembly was received in a pouch type case and an electrolyte solution containing 0.75 M lithium salt (LiTFSI) and 2.1 weight% of lithium nitrate (LiNO₃) dissolved in a mixed solvent of dimethoxyethane (DME):2-methyl furan (2-MeF) at a volume ratio of 8:2 was injected at an El/S ratio of 2.9 g/g to manufacture a lithium-sulfur battery. Thus, a concentration of 0.33 mol/ L of LiNO₃ as a nitrogen compound in the electrolyte solution was obtained.

### Example 2

A lithium-sulfur battery was manufactured by the same method as example 1 except that 3.5 weight% of lithium nitrate (LiNO₃) was dissolved in the electrolyte solution to obtain a concentration of 0.56 mol/ L.

### Example 3

A lithium-sulfur battery was manufactured by the same method as example 1 except that 5.0 weight% of lithium nitrate (LiNO₃) was dissolved in the electrolyte solution to obtain a concentration of 0.8 mol/ L.

### Comparative example 1

A lithium-sulfur battery was manufactured by the same method as example 1 except that 0.8 weight% of lithium nitrate (LiNO₃) was dissolved in the electrolyte solution to obtain a concentration of 0.13 mol/ L.

### Comparative example 2

A lithium-sulfur battery was manufactured by the same method as example 1 except that 0.4 weight% of lithium nitrate (LiNO₃) was dissolved in the electrolyte solution to obtain a concentration of 0.06 mol/ L.

**[Table 1]**

| | LiNO₃ | LiTFSI | Ratio of lithium salt / nitrogen compound in electrolyte solution (LiTFSI [mol/L] / LiNO₃ [mol/L]) | Lithium concentration of the electrolyte solution (sum of lithium salts, i.e. LiTFSI [mol/L] and LiNO₃ [mol/L]) |
|---|---|---|---|---|
| Example 1 | 2.1 wt% (0.33 M) | 0.75 M | 2.25 | 1.08 M |
| Example 2 | 3.5 wt% (0.56 M) | 0.75 M | 1.35 | 1.31 M |
| Example 3 | 5.0 wt% (0.8 M) | 0.75 M | 0.94 | 1.55 M |
| Com.Example 1 | 0.8 wt% (0.13 M) | 0.75 M | 5.90 | 0.88 M |
| Com. Example 2 | 0.4 wt% (0.06 M) | 0.75 M | 11.80 | 0.81 M |

### [Evaluation of energy density of the lithium-sulfur battery]

The energy density of the lithium-sulfur batteries was measured by discharging at 0.5 C rate to 1.8 V and charging at 0.5 C rate to 2.5 V at room temperature (23 °C).

The energy density of the manufactured lithium-sulfur battery was 320 Wh/kg.

### [Evaluation of sulfur (S) content in negative electrode at SOC 100]

Each of the lithium-sulfur batteries of examples 1 to 3 and comparative examples 1 and 2 manufactured as described above undergone activation by charging/discharging for 10 cycles at 0.5 C discharge rate and 0.3 C charge rate in a range between 1.8 V and 2.5 V at room temperature (23 °C), and was disassembled at SOC 100 to obtain the negative electrode.

In this instance, the obtained negative electrode comprises the lithium metal used to manufacture the lithium-sulfur battery and the SEI layer formed by a discharge and a recharge.

To obtain the negative electrode, the lithium-sulfur battery to be measured was disassembled to separate the positive electrode/separator/negative electrode, and the separated negative electrode was put into a container containing a set mass of solvent and washed for 5 minutes or more. In this instance, the same solvent as the nonaqueous solvent in the electrolyte solution was used.

Analysis was performed to determine the amount of lithium (Li), sulfur (S), nitrogen (N) and fluorine (F) in the obtained negative electrode, and the analysis results are shown in the following Table 2.

The analysis method for determining the amount of lithium (Li), sulfur (S), nitrogen (N) and fluorine (F) was performed as below.

First, to analyze lithium, sulfur and fluorine, the weight of samples of a predetermined amount was measured in a moisture controllable dry room, and primary oxidation reaction was induced using water. After the primary oxidation reaction, nitric acid was added to ionically dissociate the substances in the samples. Quantitative analysis of the processed solution was performed using ICP-OES (or ICP-MS). To determine the fluorine content, quantitative analysis of the solution subjected to the primary oxidation was immediately performed using IC.

To determine the nitrogen content, a predetermined amount was encapsulated with a paraffin film in the dry room, pyrolysis was performed on the encapsulated samples in an oxygen filled atmosphere using oxygen combustion chamber (bomb), and vaporized nitrogen was dissolved in an inner solvent to saturation. Quantitative analysis of the nitrogen absorbed solution was performed using IC.

The mass of each element analyzed according to the above method was calculated in weight percent based on the total weight of the negative electrode to be analyzed, and is shown in Table 2 below. The total sum of mass of each element analyzed according to the above method represents the total weight of the negative electrode.

### [Lifespan evaluation]

Each of the lithium-sulfur batteries of examples 1 to 3 and comparative examples 1 and 2 manufactured as described above undergone activation by discharging at 0.5 C rate and charging at 0.3 C rate in a range between 1.8 V and 2.5 V at room temperature (23°C), and repeated the charge and discharge process at 0.5 C rate. At the point in time when the lithium-sulfur battery retains 80% capacity based on the battery capacity measured in the first cycle after the activation, the number of cycles until then was measured, and the results are shown in the following Table 2.

**[Table 2]**

| Classification | Elemental analysis (wt%) in negative electrode at SOC 100 | | | | Lifespan evaluation |
|---|---|---|---|---|---|
| | Li | S | N | F | Cycle number |
| Example 1 | 99.4 | 0.1 | 0.4 | 0.1 | 202 |
| Example 2 | 99.2 | 0.5 | 0.2 | 0.1 | 198 |
| Example 3 | 99.7 | 0.1 | 0.2 | 0.1 | 230 |
| Comparative example 1 | 95.3 | 3.5 | 0.7 | 0.5 | 178 |
| Comparative example 2 | 93.5 | 5.6 | 0.1 | 0.8 | 158 |

As can be seen from the above Table 2, it was confirmed that it could be possible to achieve the lithium-sulfur battery having long life characteristics when the sulfur (S) content in the negative electrode is controlled below 3 weight% or less at SOC 100.

## Claims

1. A lithium-sulfur battery, comprising:
an electrode assembly, an electrolyte solution, and a case accommodating the electrode assembly,
wherein the electrode assembly comprises:
a positive electrode comprising a sulfur-carbon composite,
a negative electrode, and
a separator interposed between the positive electrode and the negative electrode;
wherein the negative electrode comprises a lithium-containing layer, and a solid electrolyte interphase (SEI) layer on at least one surface of the lithium-containing layer, and
wherein the electrolyte solution contains 1 weight% or more of a nitrogen compound based on the total weight of the electrolyte solution;
wherein the negative electrode comprises sulfur (S) in a range between 0 weight% and 3 weight% based on a total weight of the negative electrode at a state of charge (SOC) 100.

2. A lithium-sulfur battery, comprising:
an electrode assembly, an electrolyte solution, and a case accommodating the electrode assembly,
wherein the electrode assembly comprises:
a positive electrode comprising a sulfur-carbon composite,
a negative electrode, and
a separator interposed between the positive electrode and the negative electrode;
wherein the negative electrode comprises a lithium-containing layer, and a solid electrolyte interphase (SEI) layer on at least one surface of the lithium-containing layer, and
wherein the negative electrode comprises sulfur (S) in an amount in a range between 0 weight% and 3 weight% based on a total weight of the negative electrode at a state of charge (SOC) 100.

3. A lithium-sulfur battery according to claim 2,
wherein the electrolyte solution contains 1 weight% or more of a nitrogen compound based on the total weight of the electrolyte solution.

4. The lithium-sulfur battery according to one of the preceding claims 1 or 3, wherein the nitrogen compound is lithium nitrate (LiNO₃).

5. The lithium-sulfur battery according to one of the preceding claims, wherein the SOC 100 has a potential of 2.4 V to 2.7 V.

6. The lithium-sulfur battery according to one of the preceding claims, wherein the amount of the sulfur (S) in the negative electrode is 3 weight% or less, preferably 2 weight% or less, more preferably 1 weight% or less, based on a sum of weights of the sulfur (S) and lithium (Li) in the negative electrode.

7. The lithium-sulfur battery according to one of the preceding claims, wherein the amount of the lithium (Li) in the negative electrode is 96 weight% or more based on the sum of weights of the sulfur (S) and the lithium (Li) in the negative electrode,
and / or
wherein the thickness of the negative electrode is 70 µm or less, preferably in a range between 70 µm and 40 µm.

8. The lithium-sulfur battery according to one of the preceding claims, wherein a weight ratio (El/S weight ratio) of the electrolyte solution and the sulfur in the sulfur-carbon composite is 3.5 or less.

9. The lithium-sulfur battery according to one of the preceding claims 1 and 3 to 8, wherein the electrolyte solution comprises a nonaqueous solvent, and two lithium salts, wherein the lithium salts are different from each other, wherein one lithium salt is a nitrogen containing lithium salt and is the nitrogen compound of claim 1 or claim 3, preferably wherein one lithium salt does not contain nitrate.

10. The lithium-sulfur battery according to one of the preceding claims 1 and 3 to 9, wherein the concentration of the nitrogen compound in the electrolyte solution is in the range between 0.15 and 1.5 mol/ L,
and / or
wherein the ratio of the concentration of the lithium salt (mol/ L) and the concentration of the nitrogen compound (mol/ L) is in the range between 0.5 and 6.0,
and/ or
wherein the lithium concentration in the electrolyte solution, preferably obtained from the sum of the concentration of the lithium salt (mol/ L) in the electrolyte solution and the concentration of the nitrogen compound (mol/ L) in the electrolyte solution, is 0.4 mol/ L or more, preferably in the range between 0.4 and 3.0 mol/L.

11. The lithium-sulfur battery according to one of the preceding claims, wherein an energy density of the lithium-sulfur battery is 300 Wh/kg or more.

12. A method for evaluating a lifespan of a lithium-sulfur battery, wherein the lithium-sulfur battery comprises an electrode assembly, an electrolyte solution, and a case accommodating the electrode assembly, wherein the electrode assembly comprises:
a positive electrode comprising a sulfur-carbon composite,
a negative electrode, and
a separator interposed between the positive electrode and the negative electrode;
wherein the negative electrode comprises a lithium-containing layer; and a solid electrolyte interphase (SEI) layer on at least one surface of the lithium-containing layer;
wherein optionally the electrolyte solution contains 1 weight% or more of a nitrogen compound based on the overall weight of the electrolyte solution;
wherein the evaluation method comprises the steps of:
- activating the lithium-sulfur battery by charging and discharging,
and then charging the lithium-sulfur battery to a SOC 100,
- determining the content of sulfur (S) of the negative electrode,
wherein the sulfur (S) content of the negative electrode is 3 weight% or less based on a total weight of the negative electrode.

13. The method for evaluating the lifespan of a lithium-sulfur battery according to claim 12, wherein the lithium-sulfur battery was activated by discharging at a 0.5 C discharge rate and charging at a 0.3 C charge rate in a range between 1.8 V and 2.5 V at a temperature from 23 °C to 25 °C.

14. The method for evaluating the lifespan of a lithium sulfur battery according to claims 12 to 13, wherein the lithium-sulfur battery has a lifespan of 190 or more cycles over repeated charge and discharge cycles at 0.3 to 0.5 C rate in a range between 1.8 V and 2.5 V at a temperature from 23 °C to 25 °C.

## Patentansprüche

1. Lithium-Schwefel-Batterie, umfassend:
eine Elektrodenanordnung, eine Elektrolytlösung und ein Gehäuse, das die Elektrodenanordnung aufnimmt,
wobei die Elektrodenanordnung umfasst:
eine positive Elektrode, die einen Schwefel-Kohlenstoff-Verbundstoff umfasst,
eine negative Elektrode und
einen Separator, der zwischen der positiven Elektrode und der negativen
Elektrode angeordnet ist;
wobei die negative Elektrode eine lithiumhaltige Schicht und eine Festelektrolyt-Zwischenphasen(SEI)-Schicht auf mindestens einer Oberfläche der lithiumhaltigen Schicht umfasst, und
wobei die Elektrolytlösung 1 Gew.-% oder mehr einer Stickstoffverbindung, bezogen auf das Gesamtgewicht der Elektrolytlösung, enthält;
wobei die negative Elektrode Schwefel (S) in einem Bereich zwischen 0 Gew.-% und 3 Gew.-%, bezogen auf ein Gesamtgewicht der negativen Elektrode bei einem Ladezustand (SOC) 100, umfasst.

2. Lithium-Schwefel-Batterie, umfassend:
eine Elektrodenanordnung, eine Elektrolytlösung und ein Gehäuse, das die Elektrodenanordnung aufnimmt,
wobei die Elektrodenanordnung umfasst:
eine positive Elektrode, die einen Schwefel-Kohlenstoff-Verbundstoff umfasst,
eine negative Elektrode und
einen Separator, der zwischen der positiven Elektrode und der negativen Elektrode angeordnet ist;
wobei die negative Elektrode eine lithiumhaltige Schicht und eine Festelektrolyt-Zwischenphasen(SEI)-Schicht auf mindestens einer Oberfläche der lithiumhaltigen Schicht umfasst, und
wobei die negative Elektrode Schwefel (S) in einer Menge in einem Bereich zwischen 0 Gew.-% und 3 Gew.-%, bezogen auf ein Gesamtgewicht der negativen Elektrode bei einem Ladezustand (SOC) 100, umfasst.

3. Lithium-Schwefel-Batterie nach Anspruch 2,
wobei die Elektrolytlösung 1 Gew.-% oder mehr einer Stickstoffverbindung, bezogen auf das Gesamtgewicht der Elektrolytlösung, enthält.

4. Lithium-Schwefel-Batterie nach einem der vorhergehenden Ansprüche 1 oder 3, wobei die Stickstoffverbindung Lithiumnitrat (LiNO₃) ist.

5. Lithium-Schwefel-Batterie nach einem der vorhergehenden Ansprüche, wobei der SOC 100 ein Potential von 2,4 V bis 2,7 V aufweist.

6. Lithium-Schwefel-Batterie nach einem der vorhergehenden Ansprüche, wobei die Menge des Schwefels (S) in der negativen Elektrode 3 Gew.-% oder weniger, vorzugsweise 2 Gew.-% oder weniger, bevorzugter 1 Gew.-% oder weniger, bezogen auf eine Summe der Gewichte des Schwefels (S) und des Lithiums (Li) in der negativen Elektrode, beträgt.

7. Lithium-Schwefel-Batterie nach einem der vorhergehenden Ansprüche, wobei die Menge des Lithiums (Li) in der negativen Elektrode 96 Gew.-% oder mehr, bezogen auf die Summe der Gewichte des Schwefels (S) und des Lithiums (Li) in der negativen Elektrode, beträgt,
und/oder
wobei die Dicke der negativen Elektrode 70 oder weniger, vorzugsweise in einem Bereich zwischen 70 und 40 µm, beträgt.

8. Lithium-Schwefel-Batterie nach einem der vorhergehenden Ansprüche, wobei ein Gewichtsverhältnis (El/S-Gewichtsverhältnis) der Elektrolytlösung und des Schwefels in dem Schwefel-Kohlenstoff- Verbundstoff 3,5 oder weniger beträgt.

9. Lithium-Schwefel-Batterie nach einem der vorhergehenden Ansprüche 1 und 3 bis 8, wobei die Elektrolytlösung ein nichtwässriges Lösungsmittel und zwei Lithiumsalze umfasst, wobei die Lithiumsalze voneinander verschieden sind, wobei ein Lithiumsalz ein stickstoffhaltiges Lithiumsalz ist und die Stickstoffverbindung nach Anspruch 1 oder Anspruch 3 ist, wobei vorzugsweise ein Lithiumsalz kein Nitrat enthält.

10. Lithium-Schwefel-Batterie nach einem der vorhergehenden Ansprüche 1 und 3 bis 9, wobei die Konzentration der Stickstoffverbindung in der Elektrolytlösung im Bereich zwischen 0,15 und 1,5 mol/l liegt,
und / oder
wobei das Verhältnis der Konzentration des Lithiumsalzes (mol/l) und der Konzentration der Stickstoffverbindung (mol/l) im Bereich zwischen 0,5 und 6,0 liegt,
und / oder
wobei die Lithiumkonzentration in der Elektrolytlösung, vorzugsweise erhalten aus der Summe der Konzentration des Lithiumsalzes (mol/l) in der Elektrolytlösung und der Konzentration der Stickstoffverbindung (mol/l) in der Elektrolytlösung, 0,4 mol/l oder mehr, vorzugsweise im Bereich zwischen 0,4 und 3,0 mol/l, beträgt.

11. Lithium-Schwefel-Batterie nach einem der vorhergehenden Ansprüche, wobei eine Energiedichte der Lithium-Schwefel-Batterie 300 Wh/kg oder mehr beträgt.

12. Verfahren zum Bewerten einer Lebensdauer einer Lithium-Schwefel-Batterie, wobei die Lithium-Schwefel-Batterie eine Elektrodenanordnung, eine Elektrolytlösung und ein Gehäuse, das die Elektrodenanordnung aufnimmt, umfasst, wobei die Elektrodenanordnung umfasst:
eine positive Elektrode, die einen Schwefel-Kohlenstoff-Verbundstoff umfasst,
eine negative Elektrode und
einen Separator, der zwischen der positiven Elektrode und der negativen Elektrode angeordnet ist;
wobei die negative Elektrode eine lithiumhaltige Schicht und eine Festelektrolyt-Zwischenphasen(SEI)-Schicht auf mindestens einer Oberfläche der lithiumhaltigen Schicht umfasst;
wobei die Elektrolytlösung optional 1 Gew.-% oder mehr einer Stickstoffverbindung, bezogen auf das Gesamtgewicht der Elektrolytlösung, enthält;
wobei das Bewertungsverfahren die folgenden Schritte umfasst:
- Aktivieren der Lithium-Schwefel-Batterie durch Laden und Entladen,
und dann Laden der Lithium-Schwefel-Batterie auf einen SOC 100,
- Bestimmen des Gehalts an Schwefel (S) der negativen Elektrode,
wobei der Gehalt an Schwefel (S) der negativen Elektrode 3 Gew.-% oder weniger, bezogen auf ein Gesamtgewicht der negativen Elektrode, beträgt.

13. Verfahren zum Bewerten der Lebensdauer einer Lithium-Schwefel-Batterie nach Anspruch 12, wobei die Lithium-Schwefel-Batterie durch Entladen mit einer Entladerate von 0,5 C und Laden mit einer Laderate von 0,3 C in einem Bereich zwischen 1,8 V und 2,5 V bei einer Temperatur von 23 °C bis 25 °C aktiviert wurde.

14. Verfahren zum Bewerten der Lebensdauer einer Lithium-Schwefel-Batterie nach den Ansprüchen 12 bis 13, wobei die Lithium-Schwefel-Batterie eine Lebensdauer von 190 Zyklen oder mehr über wiederholte Lade- und Entladezyklen mit einer Rate von 0,3 bis 0,5 C in einem Bereich zwischen 1,8 V und 2,5 V bei einer Temperatur von 23 °C bis 25 °C aufweist.

## Revendications

1. Batterie au lithium-soufre, comprenant :
un ensemble électrode, une solution d'électrolyte et un boîtier recevant l'ensemble électrode,
dans laquelle l'ensemble électrode comprend :
une électrode positive comprenant un composite de soufre-carbone,
une électrode négative, et
un séparateur interposé entre l'électrode positive et l'électrode négative ;
dans laquelle l'électrode négative comprend une couche contenant du lithium et une couche d'interphase d'électrolyte solide (SEI) sur au moins une surface de la couche contenant du lithium, et
dans laquelle la solution d'électrolyte contient 1 % en poids ou plus d'un composé d'azote sur la base du poids total de la solution d'électrolyte ;
dans laquelle l'électrode négative comprend du soufre (S) dans une plage entre 0 % en poids et 3 % en poids sur la base d'un poids total de l'électrode négative à un état de charge (SOC) 100.

2. Batterie au lithium-soufre, comprenant :
un ensemble électrode, une solution d'électrolyte et un boîtier recevant l'ensemble électrode,
dans laquelle l'ensemble électrode comprend :
une électrode positive comprenant un composite de soufre-carbone,
une électrode négative, et
un séparateur interposé entre l'électrode positive et l'électrode négative ;
dans laquelle l'électrode négative comprend une couche contenant du lithium, et une couche d'interphase d'électrolyte solide (SEI) sur au moins une surface de la couche contenant du lithium, et
dans laquelle l'électrode négative comprend du soufre (S) dans une quantité dans une plage entre 0 % en poids et 3 % en poids sur la base d'un poids total de l'électrode négative à un état de charge (SOC) 100.

3. Batterie au lithium-soufre selon la revendication 2,
dans laquelle la solution d'électrolyte contient 1 % en poids ou plus d'un composé d'azote sur la base du poids total de la solution d'électrolyte.

4. Batterie au lithium-soufre selon l'une quelconque des revendications précédentes 1 ou 3, dans laquelle le composé d'azote est du nitrate de lithium (LiNO₃).

5. Batterie au lithium-soufre selon l'une quelconque des revendications précédentes, dans laquelle le SOC 100 a un potentiel de 2,4 V à 2,7 V.

6. Batterie au lithium-soufre selon l'une quelconque des revendications précédentes, dans laquelle la quantité du soufre (S) dans l'électrode négative est 3 % en poids ou moins, de préférence 2 % en poids ou moins, plus préférablement 1 % en poids ou moins, sur la base d'une somme des poids du soufre (S) et du lithium (Li) dans l'électrode négative.

7. Batterie au lithium-soufre selon l'une quelconque des revendications précédentes, dans laquelle la quantité du lithium (Li) dans l'électrode négative est 96 % en poids ou plus sur la base de la somme des poids du soufre (S) et du lithium (Li) dans l'électrode négative,
et/ou
dans laquelle l'épaisseur de l'électrode négative est 70 µm ou moins, de préférence dans une plage entre 70 µm et 40 µm.

8. Batterie au lithium-soufre selon l'une quelconque des revendications précédentes, dans laquelle un rapport en poids (rapport en poids El/S) de la solution d'électrolyte et du soufre dans le composite de soufre-carbone est 3,5 ou moins.

9. Batterie au lithium-soufre selon l'une quelconque des revendications précédentes 1 et 3 à 8, dans laquelle la solution d'électrolyte comprend un solvant non aqueux et deux sels de lithium, dans laquelle les sels de lithium sont différents l'un de l'autre, dans laquelle un sel de lithium est un sel de lithium contenant de l'azote et est le composé d'azote selon la revendication 1 ou la revendication 3, de préférence dans laquelle un sel de lithium ne contient pas de nitrate.

10. Batterie au lithium-soufre selon l'une quelconque des revendications précédentes 1 et 3 à 9, dans laquelle la concentration du composé d'azote dans la solution d'électrolyte est dans la plage entre 0,15 et 1,5 mole/L,
et/ou
dans laquelle le rapport de la concentration du sel de lithium (mole/L) et de la concentration du composé d'azote (mole/L) est dans la plage entre 0,5 et 6,0,
et/ ou
dans laquelle la concentration de lithium dans la solution d'électrolyte, de préférence obtenue par la somme de la concentration du sel de lithium (mole/L) dans la solution d'électrolyte et la concentration du composé d'azote (mole/L) dans la solution d'électrolyte, est 0,4 mole/L ou plus, de préférence dans la plage entre 0,4 et 3,0 mole/L.

11. Batterie au lithium-soufre selon l'une quelconque des revendications précédentes, dans laquelle une densité d'énergie de la batterie au lithium-soufre est 300 Wh/kg ou plus.

12. Procédé d'évaluation d'une durée de vie d'une batterie au lithium-soufre, dans lequel la batterie au lithium-soufre comprend un ensemble électrode, une solution d'électrolyte et un boîtier recevant l'ensemble électrode, dans lequel l'ensemble électrode comprend :
une électrode positive comprenant un composite de soufre-carbone,
une électrode négative, et
un séparateur interposé entre l'électrode positive et l'électrode négative ;
dans lequel l'électrode négative comprend une couche contenant du lithium ; et une couche d'interphase d'électrolyte solide (SEI) sur au moins une surface de la couche contenant du lithium ;
dans lequel, en option, la solution d'électrolyte contient 1 % en poids ou plus d'un composé d'azote sur la base du poids total de la solution d'électrolyte ;
dans lequel le procédé d'évaluation comprend les étapes consistant à :
- activer la batterie au lithium-soufre en chargeant et déchargeant,
puis en chargeant la batterie au lithium-soufre à un SOC 100,
- déterminer la teneur de soufre (S) de l'électrode négative,
dans lequel la teneur de soufre (S) de l'électrode négative est 3 % en poids ou moins sur la base d'un poids total de l'électrode négative.

13. Procédé d'évaluation de la durée de vie de la batterie au lithium-soufre selon la revendication 12, dans lequel la batterie au lithium-soufre était activée en déchargeant à un taux de décharge de 0,5 C et en chargeant à un taux de charge de 0,3 C dans une plage entre 1,8 V et 2,5 V à une température de 23°C à 25°C.

14. Procédé d'évaluation de la durée de vie d'une batterie au lithium-soufre selon les revendications 12 à 13, dans lequel la batterie au lithium-soufre a une durée de vie de 190 cycles ou plus pour des cycles de charge et de décharge répétés à un taux de 0,3 à 0,5 C dans une plage entre 1,8 V et 2,5 V à une température de 23°C à 25°C.
